# EUROPÄISCHE PATENTSCHRIFT

(11) **EP 1 156 648 B1**
(45) Veröffentlichungstag und Bekanntmachung des Hinweises auf die Patenterteilung: **27.08.2008**
(21) Anmeldenummer: 01104381.7
(22) Anmeldetag: 23.02.2001
(51) Int. Cl.: H04M 3/48

(54) **Verfahren zum Herstellen einer Rückruf-Telekommunikationsverbindung sowie Vermittlungseinrichtung**
Method and switching arrangement for establishing a callback communication
Méthode et dispositif de commutation pour établir une communication de rappel

(30) Priorität: 16.05.2000 DE 10023958
(43) Veröffentlichungstag der Anmeldung: 21.11.2001
(73) Patentinhaber: Tenovis GmbH & Co. KG, 60362 Frankfurt am Main (DE)
(72) Erfinder: Rodewald, Frank, 50181 Bedburg (DE)
(74) Vertreter: Tergau & Pohl Patentanwälte

(56) Entgegenhaltungen:
- WO-A-95/20858
- US-A- 5 764 746
- "Standard ECMA - 185 - 2nd edition : Private integrated services network (PISN) - Specification, functional model and information flows- call completion supplementary services" ECMA - STANDARDIZING INFORMATION AND COMMUNICATION SYSTEMS, Juni 1997 (1997-06), Seiten 1-61, XP002351975 Geneva (CH)
- PATENT ABSTRACTS OF JAPAN Bd. 013, Nr. 594 (E-867), 27. Dezember 1989 (1989-12-27) & JP 01 248753 A (NEC CORP), 4. Oktober 1989 (1989-10-04)

## Beschreibung

Die vorliegende Erfindung betrifft ein Verfahren zum Herstellen einer Telekommunikationsverbindung zwischen einem einer ersten Vermittlungseinrichtung zugeordneten ersten Endgerät und einem einer zweiten Vermittlungseinrichtung zugeordneten zweiten Endgerät, bei dem das erste Endgerät einen Rückrufwunsch hinterlässt, wenn das zweite Endgerät bei einem vom ersten Endgerät zum zweiten Endgerät aufgebauten ersten Ruf besetzt oder nicht erreichbar ist.

Weiterhin betrifft die vorliegende Erfindung eine Vermittlungseinrichtung, die nachfolgend als zweite Vermittlungseinrichtung bezeichnet wird, die Rückrufspeichermittel aufweist, die dazu vorgesehen sind, einen Rückrufwunsch zu speichern, der von einem einer ersten Vermittlungseinrichtung zugeordneten ersten Endgerät ausgesendet wird, wenn ein der zweiten Vermittlungseinrichtung zugeordnetes zweites Endgerät beim Aufbau eines ersten Rufes vom ersten Endgerät zum zweiten Endgerät besetzt oder nicht erreichbar war.

### Stand der Technik

Beispielsweise bei dem QSIG-Protokoll (einem Interface-Signalisierungsprotokoll gemäß dem EDMA-Standard, welcher beispielsweise in der Druckschrift Standard EDMA-185 offenbart ist) ist vorgesehen, dass ein erstes Endgerät über das QSIG-Protokoll ein zweites Endgerät anruft und gegebenenfalls einen Rückruf einleitet. Sobald das zweite Endgerät frei wird, wird der Rückruf gestartet, so dass das erste Endgerät gerufen wird. Dabei kann das Problem auftreten, dass das zweite Endgerät wieder besetzt wird, bevor die Verbindung mit dem ersten Endgerät hergestellt wird.

Im Rahmen des QSIG-Protokolls sind hinsichtlich dieser Problematik zwei Methoden definiert. Die erste Methode wird als Methode mit Service-Retention bezeichnet und sieht vor, dass, sofern sowohl die erste als auch die zweite Vermittlungseinrichtung die Service-Retention unterstützen, der Rückruf auf beiden Seiten eingetragen bleibt und das zweite Endgerät wieder überwacht wird, um festzustellen, wann es wieder frei wird. Das erste Endgerät erhält dabei ein Besetztzeichen. Die zweite Methode wird als Methode ohne Service-Retention bezeichnet und sieht vor, dass, sofern die erste oder die zweite Vermittlungseinrichtung keine Service-Retention unterstützen, der Rückruf auf beiden Seiten gelöscht wird. Das erste Endgerät erhält in diesem Fall ein Besetztzeichen und kann einen erneuten Rückrufwunsch hinterlassen.

Beispielsweise in dem Fall, in dem das erste Endgerät ein ein Display aufweisendes Telefon ist, wird bei beiden Methoden zunächst das erste Endgerät gerufen, wobei auf dem Display beispielsweise "Rückruf" angezeigt wird. Wenn das zweite Endgerät zwischenzeitlich wieder besetzt ist erhält das erste Endgerät in Form eines Telefons sofort nach Entgegennahme des Rufes das Besetztzeichen. Dies kann zu Verwirrungen führen, da der Rückruf normalerweise signalisieren sollte, dass das zweite Endgerät nun frei ist.

Ferner ist es bekannt, dass, nachdem das zweite Endgerät frei geworden ist und das erste Endgerät gerufen wird, für den Fall, dass das zweite Endgerät wieder besetzt wird, bevor die Verbindung zustande kommt, der Ruf zum ersten Endgerät ausgelöst und der Rückruf gelöscht wird.

Die letztere Lösung kann jedoch insofern zu Verwirrungen führen, als beispielsweise ein Telefon zunächst klingelt und dann wieder aufhört zu klingeln, bevor der Hörer abgehoben wurde, wobei zusätzlich der eingetragene Rückruf gelöscht ist. Weiterhin kann bei dieser Lösung der Rückruf beispielsweise dadurch versehentlich gelöscht werden, dass der Hörer des zweiten Endgerätes kurzfristig auf die Gabel gedrückt wird, bevor er endgültig eingehängt wird.

### Vorteile der Erfindung

Dadurch, dass bei dem erfindungsgemäßen Verfahren ein als Antwort auf den gewünschten Rückruf vom ersten Endgerät zum zweiten Endgerät aufgebauter zweiter Ruf für den Fall, dass das zweite Endgerät inzwischen erneut besetzt ist, zumindest für einen vorgegebenen Zeitabschnitt in ein der zweiten Vermittlungseinrichtung zugeordnetes Wartefeld gestellt wird, um darauf zu warten, dass das zweite Endgerät erneut frei wird, ohne dass das erste Endgerät ein Besetztzeichen erhält, können die vorstehend genannten Probleme vermieden werden. Insbesondere wenn es sich bei den Endgeräten um Telefone handelt, werden die Teilnehmer durch die Anwendung des erfindungsgemäßen Verfahrens nicht durch einen unerwarteten Besetztton, einen (zu früh) gelöschten Rückruf oder dergleichen verwirrt.

Die gleichen Vorteile ergeben sich, wenn zumindest die zweite Vermittlungseinrichtung ein Wartefeld und Mittel aufweist, die dazu vorgesehen sind, einen als Antwort auf den gewünschten Rückruf vom ersten Endgerät zum zweiten Endgerät aufgebauten zweiten Ruf für den Fall, dass das zweite Endgerät inzwischen erneut besetzt ist, zumindest für einen vorgegebenen Zeitabschnitt in das Wartefeld zu stellen, um darauf zu warten, dass das zweite Endgerät erneut frei wird, ohne dass das erste Endgerät ein Besetztzeichen erhält.

Bei dem erfindungsgemäßen Verfahren ist es besonders vorteilhaft, dass der zweite Ruf vom ersten Endgerät zum zweiten Endgerät auf das zweite Endgerät geschaltet wird, sobald das zweite Endgerät wieder frei ist. Durch diese Vorgehensweise kommt die gewünschte Telekommunikationsverbindung schnellstmöglich zustande.

Vorzugsweise wird das erfindungsgemäße Verfahren QSIG-konform durchgeführt, da in diesem Fall beispielsweise nur die das Verfahren durchführende Vermittlungsstelle entsprechend angepasst werden muss, ohne dass Änderungen an dieser Vermittlungsstelle angeschlossenen Endgeräten oder mit dieser Vermittlungseinrichtung zusammenwirkenden weiteren Vermittlungseinrichtungen erforderlich sind.

Insbesondere im Zusammenhang mit der erwähnten QSIG-konformen Durchführung des erfindungsgemäßen Verfahrens kann die zweite Vermittlungsstelle als Antwort auf ein von dem zweiten Endgerät hinsichtlich des zweiten Rufes erzeugtes Besetzt-Signal anstelle eines üblicherweise an die erste Vermittlungseinrichtung gesendeten Trenn-Signals ein Freimelde-Signal senden. In diesem Fall würde das durch das QSIG-Protokoll definierte "Disconnect"-Signal durch des ebenfalls durch das QSIG-Protokoll definierte "Alert"-Signal ersetzt.

Im Zusammenhang mit dem erfindungsgemäßen Verfahren kann weiterhin vorgesehen sein, dass das erste Endgerät, während der zweite Ruf in das der zweiten Vermittlungseinrichtung zugeordnete Wartefeld gestellt ist, ein Rufzeichen erhält. Das Rufzeichen wird in diesem Fall vorzugsweise von der zweiten Vermittlungseinrichtung angeschaltet. Wenn das erste Endgerät ein Telefon ist, würde ein Benutzer dieses Telefons, das von ihm erwartete Rufzeichen auch dann hören, wenn das zweite Endgerät in Wirklichkeit noch besetzt ist. Sobald das zweite Endgerät erneut frei wird, wird die Verbindung zwischen dem ersten Endgerät und dem zweiten Endgerät vorzugsweise unmittelbar hergestellt.

Weiterhin ist es denkbar, dass das erste Endgerät, während der zweite Ruf in das der zweiten Vermittlungseinrichtung zugeordnete Wartefeld gestellt ist, ein speziell für diesen Fall vorgesehenes Zeichen oder eine Sprachnachricht erhält. Auch das Zeichen oder die Sprachnachricht wird in diesem Fall vorzugsweise von der zweiten Vermittlungseinrichtung angeschaltet. Wenn das erste Endgerät beispielsweise durch ein Telefon gebildet ist, könnte eine derartige Sprachnachricht beispielsweise lauten: "Dies ist Ihr Rückruf ... bitte warten ...".

Bei der erfindungsgemäßen Vermittlungseinrichtung sind vorzugsweise Mittel vorgesehen, die den zweiten Ruf vom ersten Endgerät zum zweiten Endgerät auf das zweite Endgerät schalten, sobald das zweite Endgerät wieder frei ist. Durch derartige Mittel wird, analog zum erfindungsgemäßen Verfahren, sichergestellt, dass die Verbindung zwischen dem ersten Endgerät und dem zweiten Endgerät schnellstmöglich hergestellt wird.

Auch die erfindungsgemäße Vermittlungseinrichtung arbeitet vorzugsweise QSIG-konform, das heißt sie sendet QSIG-konforme Signale aus und empfängt diese. Zur Vermeidung von Wiederholungen wird bezüglich den Vorteilen, die sich durch die Anwendung des QSIG-Protokolls ergeben, auf die vorstehend im Zusammenhang mit dem erfindungsgemäßen Verfahren angegebenen Vorteile verwiesen.

Bei der erfindungsgemäßen Vermittlungseinrichtung kann vorgesehen sein, dass sie als Antwort auf ein von dem zweiten Endgerät hinsichtlich des zweiten Rufes erzeugtes Besetzt-Signal anstelle eines üblicherweise an die erste Vermittlungseinrichtung gesendeten Trennen-Signals ein Freimelde-Signal sendet.

Schließlich kann auch bei der erfindungsgemäßen Vermittlungseinrichtung vorgesehen sein, dass sie, während der zweite Ruf in das Wartefeld gestellt ist, ein an das erste Endgerät gerichtetes Rufzeichen oder ein an das erste Endgerät gerichtetes, speziell für diesen Fall vorgesehenes Zeichen oder eine Sprachnachricht sendet.

### Zeichnungen

Die Erfindung wird nachfolgend anhand der zugehörigen Zeichnungen noch näher erläutert.

Es zeigen:
Figur 1 ein vollständiges Pfeildiagramm für einen erfolgreichen Rückruf unter Verwendung des QSIG-Protokolls;
Figur 2 ein Pfeildiagramm für den Überwachungsabschnitt eines erfolglosen Rückrufs unter Verwendung des QSIG-Protokolls gemäß dem Stand der Technik; und
Figur 3 ein Pfeildiagramm des Überwachungsabschnitts unter Verwendung des QSIG-Protokolls gemäß der vorliegenden Erfindung.

### Beschreibung des Ausführungsbeispiels

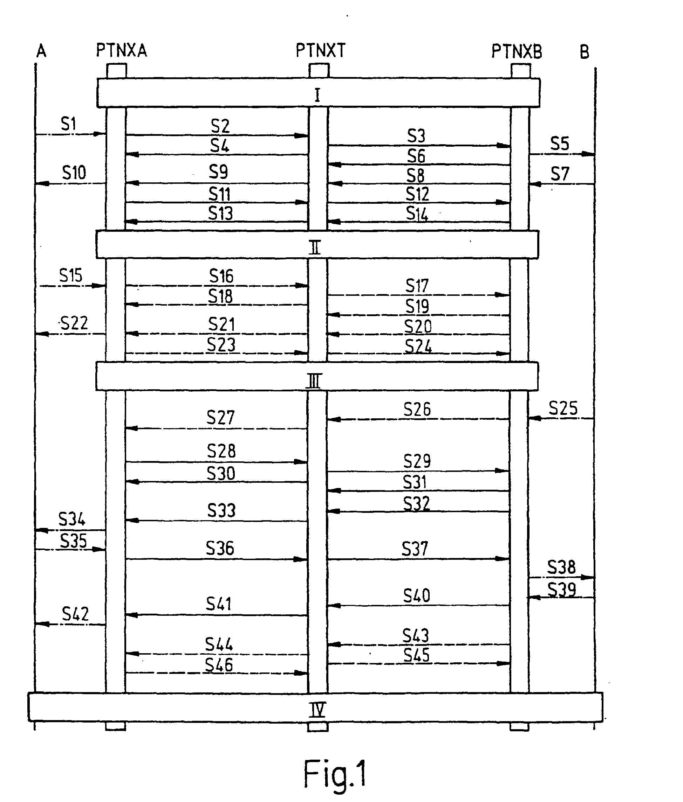

Bei den in den Figuren 1 bis 3 dargestellten Pfeildiagrammen ist jeweils von links nach rechts ein erstes Endgerät A, eine erste Vermittlungseinrichtung PTNXA, eine Transit-Vermittlungseinrichtung PTNXT, eine zweite Vermittlungseinrichtung PTNXB und ein zweites Endgerät B dargestellt.

Die gestrichelten Pfeile bezeichnen jeweils eine D-Kanal-Verbindung, die durchgezogenen Pfeile bezeichnen jeweils eine B-Kanal-Verbindung und die Strich-punktierten-Pfeile bezeichnen jeweils Meldungen beziehungsweise Signale, die zu den Endgeräten übertragen werden.

Bei dieser Art von Pfeildiagrammen entspricht der zeitliche Ablauf der Richtung von oben nach unten, das heißt ein Signal, das über eine durch einen oberen Pfeil dargestellte Verbindung übertragen wird, wird vor einem Signal übertragen, das über eine durch einen unteren Pfeil dargestellten Verbindung übertragen wird.

Figur 1 zeigt ein vollständiges Pfeildiagramm für einen erfolgreichen Rückruf unter Verwendung des QSIG-Protokolls. Beim Schritt S1 wird vom ersten Endgerät A ein Signal SETUP REQUEST zur ersten Vermittlungseinrichtung PTNXA übertragen, das einem Antrag zum Aufbau einer Verbindung entspricht. Daraufhin sendet die erste Vermittlungseinrichtung PTNXA beim Schritt S2 ein Signal SETUP(C1) zu der Transit-Vermittlungseinrichtung PTNXT, das heißt es wird versucht eine Verbindung aufzubauen, wobei die Angaben Cᵢ jeweils Verbindungsindizes darstellen. Die Transit-Vermittlungseinrichtung PTNXT sendet bei S3 ein Signal SETUP(C2) zu der zweiten Vermittlungseinrichtung PTNXB, das heißt es wird versucht eine Verbindung zwischen der Transit-Vermittlungseinrichtung PTNXT und der zweiten Vermittlungseinrichtung PTNXB aufzubauen. Beim Schritt S4 sendet die Transit-Vermittlungseinrichtung PTNXT ein Signal CALL-PROCEEDING(C1) zu der ersten Vermittlungseinrichtung PTNXA, das heißt das Signal SETUP(C1) von Schritt S2 hat die Transit-Vermittlungseinrichtung PTNXT erreicht und die entsprechenden Wahlinformation ist vollständig. Anderenfalls würde mit einem Signal SETUP-ACK quittiert. Daraufhin sendet die zweite Vermittlungseinrichtung PTNXB beim Schritt S5 ein Signal SETUP-REQUEST an das zweite Endgerät B. Wie beim Schritt S4 sendet die zweite Vermittlungseinrichtung beim Schritt S6 ein entsprechendes Signal CALL-PROCEEDING(C2) an die Transit-Vermittlungseinrichtung PTNXT, das heißt das Signal SETUP(C2) von Schritt S3 hat die zweite Vermittlungseinrichtung PTNXB erreicht und die entsprechende Wahlinformation ist vollständig. Beim Schritt S7 signalisiert das zweite Endgerät B der zweiten Vermittlungseinrichtung PTNXB dass es besetzt ist. Daher sendet die zweite Vermittlungseinrichtung PTNXB beim Schritt S8 ein Signal DISCONNECT(C2, USER-BUSY) zu der Transit-Vermittlungseinrichtung PTNXT, das besagt, dass die Verbindung zwischen der Transit-Vermittlungseinrichtung PTNXT und der zweiten Vermittlungseinrichtung PTNXB getrennt werden soll, da das zweite Endgerät B besetzt ist. Entsprechend sendet die Transit-Vermittlungseinrichtung PTNXT beim Schritt S9 ein Signal DISCONNECT(C1, USER-BUSY) zu der ersten Vermittlungseinrichtung PTNXA, das der ersten Vermittlungseinrichtung PTNXA mitteilt, dass die Verbindung C1 zu trennen ist, weil das gerufene zweite Endgerät B besetzt ist. Daraufhin sendet die erste Vermittlungseinrichtung PTNXA beim Schritt S10 ein Signal B-BUSY-INDICATION an das erste Endgerät A, woraufhin der das erste Endgerät A benutzende Teilnehmer beispielsweise das Besetztzeichen hört. Beim Schritt S11 sendet die erste Vermittlungseinrichtung PTNXA ein Signal RELEASE(C1) zu der Transit-Vermittlungseinrichtung PTNXT, das die Freigabe der Verbindung C1 vorbereitet. Entsprechend sendet die Transit-Vermittlungseinrichtung PTNXT beim Schritt S12 ein Signal RELEASE(C2) an die zweite Vermittlungseinrichtung PTNXB, das die Freigabe der Verbindung zwischen der Transit-Vermittlungseinrichtung PTNXT und der zweiten Vermittlungseinrichtung PTNXB vorbereitet. Beim Schritt S13 sendet die Transit-Vermittlungseinrichtung PTNXT ein Signal RELEASE-COMPLETE(C1) an die erste Vermittlungseinrichtung PTNXA, das heißt die Verbindung C1 zwischen der ersten Vermittlungseinrichtung PTNXA und der Transit-Vermittlungseinrichtung PTNXT ist getrennt. Beim Schritt S14 wird ein entsprechendes Signal RELEASE-COMPLETE(C2) von der zweiten Vermittlungseinrichtung PTNXB zu der Transit-Vermittlungseinrichtung PTNXT gesendet, das heißt auch die Verbindung zwischen der Transit-Vermittlungseinrichtung PTNXT und der zweiten Vermittlungseinrichtung PTNXB ist getrennt.

Durch den mit II gekennzeichneten Block wird durch das erste Endgerät A ein Rückrufwunsch CCBS-REQ bei der zweiten Vermittlungseinrichtung PTNXB hinterlassen. Der Rückrufwunsch CCBS-REQ ist für den Fall vorgesehen, dass das zweite Endgerät besetzt ist. Alternativ zu dem Rückrufwunsch CCBS-REQ kann auch ein Rückrufwunsch CCNR-REQ hinterlassen werden, der für den Fall vorgesehen ist, dass das zweite Endgerät B nicht antwortet, das heißt, dass beispielsweise der Hörer nicht abgehoben wird. Hinsichtlich der vorliegenden Erfindung ist es jedoch unerheblich, ob der Rückrufwunsch CCBS-REQ oder der Rückrufwunsch CCNR-REQ hinterlassen wird.

Beim Schritt S15 sendet das erste Endgerät A ein Signal CCBS-REQUEST an die erste Vermittlungseinrichtung PTNXA, das einem Antrag auf Eintrag eines Rückrufs entspricht. Beim Schritt S16 sendet die erste Vermittlungseinrichtung PTNXA daraufhin ein Signal SETUP(C3, CCBS-REQUEST.INV) an die Transit-Vermittlungseinrichtung PTNXT, das heißt es wird versucht eine Verbindung C3 aufzubauen, um den Rückrufwunsch an die Transit-Vermittlungseinrichtung PTNXT weiterzuleiten. Letztere sendet beim Schritt S17 ein Signal SETUP(C4, CCBS-REQUEST.INV) an die zweite Vermittlungseinrichtung PTNXB, das heißt es wird versucht eine Verbindung C4 aufzubauen, um den Rückrufwunsch weiterzuleiten. Die Transit-Vermittlungseinrichtung PTNXT bestätigt der ersten Vermittlungseinrichtung PTNXA beim Schritt S18 durch das Senden eines Signals CALL-PROCEEDING(C3), dass sie die für die Verbindung C3 erforderlichen Informationen vollständig erhalten hat. Entsprechend sendet die zweite Vermittlungseinrichtung PTNXB beim Schritt S19 ein Signal CALL-PROCEEDING(C4) an die Transit-Vermittlungseinrichtung PTNXT, das besagt, dass die zweite Vermittlungseinrichtung PTNXB, die für den Aufbau der Verbindung C4 erforderlichen Informationen vollständig erhalten hat. Beim Schritt S20 sendet die zweite Vermittlungseinrichtung PTNXB ein Signal CONNECT(C4, CCBS-REQUEST.RR), das die positive Quittung auf das Signal CCBS-REQUEST.INV darstellt, an die Transit-Vermittlungseinrichtung PTNXT, das heißt die Verbindung zwischen der Transit-Vermittlungseinrichtung PTNXT und der zweiten Vermittlungseinrichtung PTNXB zum Hinterlassen des Rückrufwunsches besteht. In ähnlicher Weise sendet die Transit-Vermittlungseinrichtung PTNXT beim Schritt S21 ein Signal CONNECT(C3, CCBS-REQUEST.RR) an die erste Vermittlungseinrichtung PTNXA, das heißt auch die Verbindung zwischen der Transit-Vermittlungseinrichtung PTNXT und der ersten Vermittlungseinrichtung PTNXA zum Hinterlassen des Rückrufwunsches besteht. Daraufhin sendet die erste Vermittlungseinrichtung PTNXA dem ersten Endgerät A beim Schritt S22 ein Signal CCBS-CONFIRM, das dem ersten Endgerät A mitteilt, dass der Rückrufwunsch hinterlassen würde. Beim Schritt 23 sendet die erste Vermittlungseinrichtung PTNXA ein Bestätigungssignal CONNECT-ACK(C3) bezüglich der Verbindung C3 an die Transit-Vermittlungseinrichtung PTNXT, die beim Schritt S24 ein entsprechendes Signal CONNECT-ACK(C4) an die zweite Vermittlungseinrichtung PTNXB weitersendet.

Der Rückrufwunsch CCBS-REQ ist damit in der zweiten Vermittlungseinrichtung PTNXB gespeichert.

Der mit III gekennzeichnete Block stellt die Überwachung des zweiten Endgerätes B dar.

Beim Schritt S25 sendet das zweite Endgerät B ein Signal B-NOT-BUSY-IND an die zweite Vermittlungseinrichtung PTNXB, da es besagt, dass das zweite Endgerät B nunmehr wieder frei ist. Daraufhin sendet die zweite Vermittlungseinrichtung PTNXB beim Schritt 26 ein Signal FACILITY(C4, CC-EXEC-POSSIBLE.INV) an die Transit-Vermittlungseinrichtung PTNXT, wobei das Signal FACILITY Leitungsmerkmalinformationen bzw. "Supplementary Service Information" überträgt und in diesem Fall besagt, dass die gewünschte Verbindung zwischen dem ersten Endgerät A und dem zweiten Endgerät B nunmehr aufgebaut werden kann. Ein entsprechendes Signal FACILITY(C3, CC-EXEC-POSSIBLE.INV) wird beim Schritt 27 von der Transit-Vermittlungseinrichtung PTNXT zu der ersten Vermittlungseinrichtung PTNXA gesendet, die daraufhin beim Schritt S28 ein Signal SETUP(C5, CC-PATH-RESERVE.INV) an die Transit-Vermittlungseinrichtung PTNXT sendet, um eine B-Kanal-Verbindung C5 aufzubauen. Ein entsprechendes Signal SETUP(C6, CC-PATH-RESERVE.INV) wird beim Schritt S29 von der Transit-Vermittlungseinrichtung PTNXT zu der zweiten Vermittlungseinrichtung PTNXB gesendet, um eine B-Kanal-Verbindung C6 aufzubauen. Die Transit-Vermittlungseinrichtung PTNXT sendet beim Schritt S30 ein Signal CALL-PROCEEDING(C5) an die erste Vermittlungseinrichtung PTNXA, um zu bestätigen, dass sie die für die Verbindung C5 erforderlichen Informationen vollständig erhalten hat. Ein entsprechendes Signal CALL-PROCEEDING(C6) wird beim Schritt S31 von der zweiten Vermittlungseinrichtung PTNXB zu der Transit-Vermittlungseinrichtung PTNXT gesendet. Sobald weitere für den Aufbau der Verbindung erforderliche Informationen vorliegen sendet die zweite Vermittlungseinrichtung PTNXB beim Schritt S32 ein Signal PROGRESS(C6, CC-PATH-RESERVE.RR) an die Transit-Vermittlungseinrichtung, das bedeutet, dass die Verbindung bis zu der zweiten Vermittlungseinrichtung PTNXB aufgebaut werden konnte. Ein entsprechendes Signal PROGRESS(C5, CC-PATH-RESERVE.RR) wird beim Schritt S33 von der Transit-Vermittlungseinrichtung PTNXT zu der ersten Vermittlungseinrichtung PTNXA weitergeleitet. Daraufhin sendet die erste Vermittlungseinrichtung PTNXA beim Schritt S34 ein Signal RECALL-INDICATION an das erste Endgerät A, wobei dieses Signal die Durchführung des gewünschten Rückrufes signalisiert. Beim Schritt S35 antwortet das erste Endgerät A, indem es ein Signal RECALL-RESPONNSE an die erste Vermittlungseinrichtung PTNXA sendet. Beim Schritt S36 sendet die erste Vermittlungseinrichtung PTNXA ein Leitungsmerkmalinformationen enthaltendes Signal FACILITY(C5, CC-RINGOUT.INV) an die Transit-Vermittlungseinrichtung PTNXT. Ein entsprechendes Signal FACILITY(C6, CC-RINGOUT.INV) wird beim Schritt S37 von der Transit-Vermittlungseinrichtung PTNXT zu der zweiten Vermittlungseinrichtung PTNXB gesendet. Die zweite Vermittlungseinrichtung PTNXB sendet daraufhin beim Schritt S38 ein Signal SETUP-REQUEST an das zweite Endgerät B, um dieses zu rufen. Da das zweite Endgerät in diesem Fall frei ist sendet es beim Schritt 39 ein Signal ALERTING-INDICATION zurück an die zweite Vermittlungseinrichtung PTNXB. Diese sendet beim Schritt S40 ein Signal ALERT(C6) an die Transit-Vermittlungseinrichtung PTNXT weiter, da es einer Frei-Meldung entspricht. Ein entsprechendes Signal ALERT(C5) wird beim Schritt S41 von der Transit-Vermittlungseinrichtung PTNXT zu der ersten Vermittlungseinrichtung PTNXA weitergeleitet. Die erste Vermittlungseinrichtung PTNXA sendet daraufhin beim Schritt S42 ein Signal ALERTING-INDICATION an das erste Endgerät, was, wenn das erste Endgerät durch ein Telefon gebildet ist, zur Folge hat, dass der Teilnehmer das Rufzeichen hört. Beim Schritt S43 sendet die zweite Vermittlungseinrichtung PTNXB ein Signal RELEASE(C4) an die Transit-Vermittlungseinrichtung PTNXT, da es angibt, dass die Verbindung C4 getrennt werden soll. Ein entsprechendes Signal RELEASE(C3) wird beim Schritt S44 von der Transit-Vermittlungseinrichtung PTNXT an die erste Vermittlungseinrichtung PTNXA gesendet, wobei dieses Signal angibt, dass die Verbindung C3 zwischen der Transit-Vermittlungseinrichtung PTNXT und der ersten Vermittlungseinrichtung PTNXA getrennt werden soll. Beim Schritt S45 bestätigt die Transit-Vermittlungseinrichtung PTNXT durch das Signal RELEASE-COMPLETE(C4) der zweiten Vermittlungseinrichtung PTNXB, dass die Verbindung C4 getrennt beziehungsweise freigegeben wurde. Ein entsprechendes Signal RELEASE-COMPLETE(C3) wird beim Schritt S46 von der ersten Vermittlungseinrichtung PTNXA an die Transit-Vermittlungseinrichtung PTNXT gesendet.

In dem nicht näher dargestellten Block IV wird in bekannter Weise die Verbindung zwischen dem ersten Endgerät A und dem zweiten Endgerät B hergestellt beziehungsweise aufrechterhalten, wobei dieses durch entsprechende CONNECT-Signale erzielt wird.

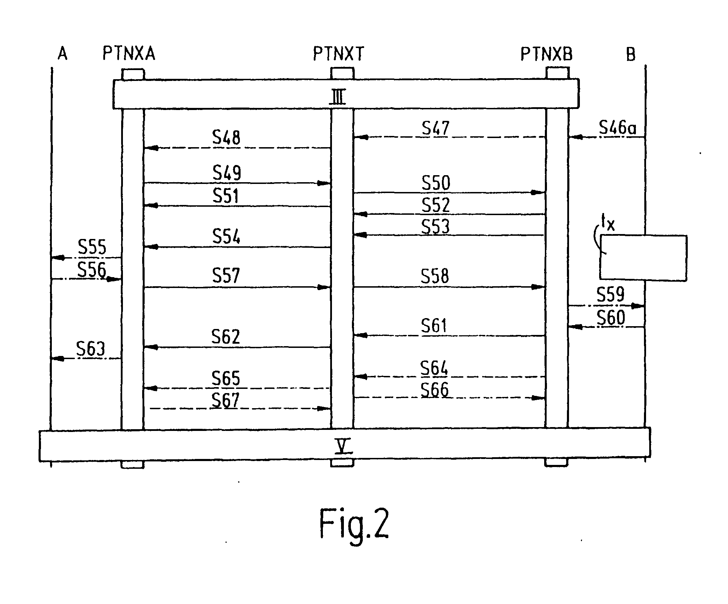

Figur 2 zeigt ein Pfeildiagramm für einen erfolglosen Rückruf unter Verwendung des QSIG-Protokolls. Die in Figur 1 mit I und II bezeichneten Blöcke sind in Figur 2 nicht dargestellt, da sie identisch sind.

Beim Schritt S46a meldet das zweite Endgerät B der zweiten Vermittlungsstelle durch das Signal B-NOT-BUSY-INDICATION, dass das zweite Endgerät B wieder frei ist. Beim Schritt S47 sendet die zweite Vermittlungseinrichtung PTNXB daraufhin das Signal FACILITY(C4, CC-EXEC-POSSIBLE.INV) an die Transit-Vermittlungseinrichtung PTNXT, um die Information weiterzuleiten, dass das zweite Endgerät B nunmehr frei ist. Ein entsprechendes Signal FACILITY(C3, CC-EXEC-POSSIBLE.INV) wird beim Schritt S48 von der Transit-Vermittlungseinrichtung PTNXT zu der ersten Vermittlungseinrichtung PTNXA gesendet, um diese davon in Kenntnis zu setzen, dass das gewünschte zweite Endgerät B nunmehr frei ist. Daraufhin sendet die erste Vermittlungseinrichtung PTNXA beim Schritt S49 ein Signal SETUP(C5, CC-PATH-RESERVE.INV) an die Transit-Vermittlungseinrichtung PTNXT, um eine B-Kanal-Verbindung C5 zwischen der ersten Vermittlungseinrichtung PTNXA und der Transit-Vermittlungseinrichtung PTNXT herzustellen. Eine entsprechendes Signal SETUP(C6, CC-PATH-RESERVE.INV) wird von der Transit-Vermittlungseinrichtung PTNXT ab Schritt S50 an die zweite Vermittlungseinrichtung PTNXB gesendet, damit eine entsprechende B-Kanal-Verbindung C6 zwischen der Transit-Vermittlungseinrichtung PTNXT und der zweiten Vermittlungseinrichtung PTNXB aufgebaut werden kann. Beim Schritt S51 bestätigt die Transit-Vermittlungseinrichtung PTNXT durch ein Signal CALL-PROCEEDING(C5) der ersten Vermittlungseinrichtung PTNXA, dass sie die für die Verbindung C5 erforderlichen Informationen erhalten hat. Ein entsprechendes Signal CALL-PROCEEDING(C6) wird beim Schritt S52 von der zweiten Vermittlungseinrichtung PTNXB zu der Transit-Vermittlungseinrichtung PTNXT gesendet. Im Anschluss daran sendet die zweite Vermittlungseinrichtung PTNXB beim Schritt S53 ein Signal PROGRESS(C6, CC-PATH-RESERVE.RR) an die Transit-Vermittlungseinrichtung PTNXT, das besagt, dass die Verbindung C6 bis zur zweiten Vermittlungseinrichtung PTNXB aufgebaut werden konnte. Ein entsprechendes Signal PROGRESS(C5, CC-PATH-RESERVE.RR) wird beim Schritt S54 von der Transit-Vermittlungseinrichtung PTNXT zu der ersten Vermittlungseinrichtung PTNXA gesendet, die daraufhin beim Schritt S55 dem ersten Endgerät A ein Signal RECALL-INDICATE sendet, um das erste Endgerät A von dem Rückruf in Kenntnis zu setzen.

Dieses erste Endgerät A sendet daraufhin beim Schritt 56 ein Signal RECALL-RESPONSE an die erste Vermittlungseinrichtung PTNXA, da es eine Antwort auf den Rückruf darstellt. Beim Schritt S57 sendet die erste Vermittlungseinrichtung PTNXA daraufhin ein Signal FACILITY(C5, CC-RINGOUT.INV) an die Transit-Vermittlungseinrichtung PTNXT, das Leitungsmerkmalinformationen enthält. Ein entsprechendes Signal FACILITY(C6, CC-RINGOUT.INV) wird beim Schritt 58 von der Transit-Vermittlungseinrichtung PTNXT zu der zweiten Vermittlungseinrichtung PTNXB gesendet. Daraufhin versucht die zweite Vermittlungseinrichtung PTNXB beim Schritt S59 durch das Signal SETUP-REQUEST eine Verbindung zu dem zweiten Endgerät B herzustellen. Dieses zweite Endgerät B ist jedoch seit dem Zeitpunkt tₓ wieder besetzt, wie dies in Figur 2 durch den Block ganz rechts angedeutet ist, weshalb vom zweiten Endgerät B das Signal B-BUSY-INDICATION an die zweite Vermittlungseinrichtung PTNXB gesendet wird, und zwar beim Schritt S60. Beim Schritt S61 teilt die zweite Vermittlungseinrichtung PTNXB der Transit-Vermittlungseinrichtung PTNXT durch das Signal DISCONNECT(C6, CC-RINGOUT. RE) mit, dass eine Verbindung derzeit nicht möglich ist. Ein entsprechendes Signal DISCONNECT(C5, CC-RINGOUT. RE) wird beim Schritt S62 von der Transit-Vermittlungseinrichtung PTNXT zu der ersten Vermittlungseinrichtung PTNXA weitergeleitet, woraufhin die erste Vermittlungseinrichtung PTNXA beim Schritt S63 ein Signal DISCONNECT-INDICATION an das erste Endgerät A weiterleitet. Wenn das erste Endgerät A ein Telefon ist hört der Teilnehmer zu diesem Zeitpunkt ein Besetztzeichen, was zu der anfangs erläuterten Verwirrung führen kann. Beim Schritt S64 wird durch das Signal RELEASE(C4) die Freigabe der Verbindung C4 vorbereitet. Ein entsprechendes Signal RELEASE(C3) wird beim Schritt S65 von der Transit-Vermittlungseinrichtung PTNXT zu der ersten Vermittlungseinrichtung PTNXA gesendet, um die Freigabe der D-Kanal-Verbindung C3 vorzubereiten. Nach dem Trennen der D-Kanal-Verbindung sendet die Transit-Vermittlungseinrichtung PTNXT beim Schritt S66 ein Signal RELEASE-COMPLETE(C4) an die zweite Vermittlungseinrichtung PTNXB, das anzeigt, dass die D-Kanal-Verbindung C4 getrennt wurde. Ein entsprechendes Signal RELEASE-COMPLETE(C3) wird beim Schritt S67 von der ersten Vermittlungseinrichtung PTNXA zu der Transitvermittlungseinrichtung PTNXT gesendet. Die im Zusammenhang mit der vorliegenden Erfindung nicht näher interessierenden Signale RELEASE und RELEASE-COMPLETE für C5 und C6 sind in Figur 2 nicht eingetragen, da deren Funktion dem Fachmann bekannt ist. Beim Erreichen des mit V gekennzeichneten Blockes ist somit keine Verbindung zwischen dem ersten Endgerät A und dem zweiten Endgerät B zustandegekommen, obwohl ein entsprechender Rückrufwunsch hinterlassen wurde.

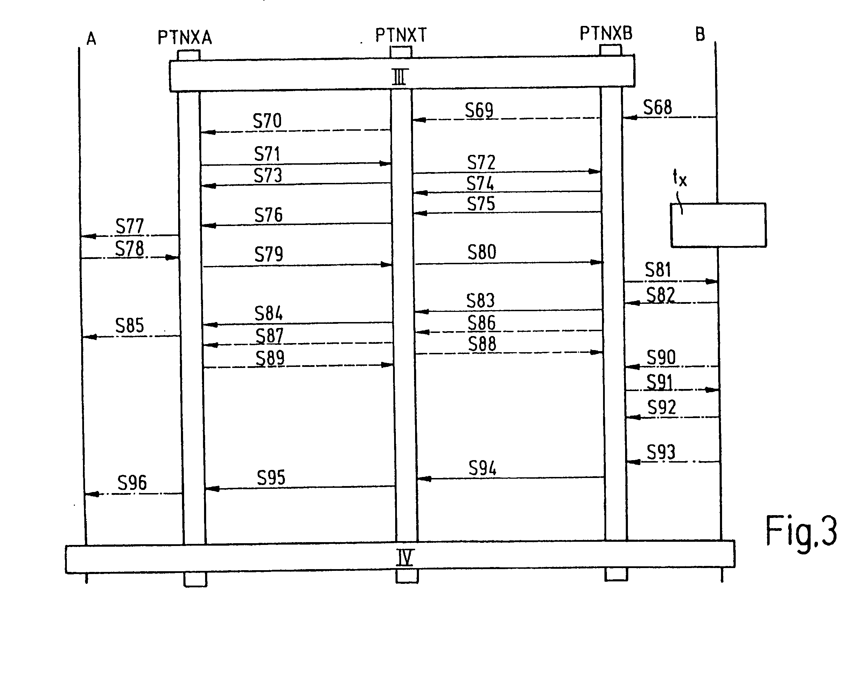

In Figur 3 ist der Überwachungsblock III dargestellt, der bei dem erfindungsgemäßen Verfahren unter Verwendung des QSIG-Protokolls eingesetzt wird, um die bei der in Figur 2 dargestellten Vorgehensweise auftretenden Probleme zu vermeiden.

Das zweite Endgerät B sendet beim Schritt S68 das Signal B-NOT-BUSY-INDICATION an die zweite Vermittlungseinrichtung PTNXB, um anzuzeigen, dass das zweite Endgerät B nunmehr frei ist. Daraufhin sendet die zweite Vermittlungseinrichtung PTNXB beim Schritt S69 das Signal FACILITY(C4, CC-EXEC-POSSIBLE.INV) an die Transit-Vermittlungseinrichtung PTNXT, das heißt, es werden Informationen dahingehend übertragen, dass das zweite Endgerät B nunmehr frei ist. Ein entsprechendes Signal FACILITY(C3, CC-EXEC-POSSIBLE.INV) wird von der Transit-Vermittlungseinrichtung PTNXT beim Schritt S70 an die erste Vermittlungseinrichtung PTNXA gesendet, die daraufhin beim Schritt S71 das Signal SETUP(C5, CC-PATH-RESERVE.INV) an die Transit-Vermittlungseinrichtung PTNXT sendet, um den Aufbau einer Verbindung C5 einzuleiten. Ein entsprechendes Signal SETUP(C6, CC-PATH-RESERVE.INV) wird beim Schritt S72 von der Transit-Vermittlungseinrichtung PTNXT zu der zweiten Vermittlungseinrichtung PTNXB gesendet, um eine Verbindung zwischen der Transit-Vermittlungseinrichtung PTNXT und der zweiten Vermittlungseinrichtung PTNXB aufzubauen. Beim Schritt S73 antwortet die Transit-Vermittlungseinrichtung PTNXT durch das Signal CALL-PROCEEDING(C5) auf das beim Schritt S71 von der ersten Vermittlungseinrichtung PTNXA empfangene Signal. Entsprechend antwortet die zweite Vermittlungseinrichtung PTNXB beim Schritt S74 durch das Signal CALL-PROCEEDING(C6) auf das beim Schritt S72 von der TransitVermittlungseinrichtung PTNXT empfangene Signal. Der Fortschritt des Aufbaus der Verbindung C6 wird durch das Signal PROGRESS(C6, CC-PATH-RESERVE.RR) beim Schritt S75 von der zweiten Vermittlungseinrichtung PTNXB zu der Transit-Vermittlungseinrichtung PTNXT weitergeleitet. Ein entsprechendes Signal PROGRESS(C5, CC-PATH-RESERVE.RR) wird beim Schritt S76 von der Transit-Vermittlungseinrichtung PTNXT zu der ersten Vermittlungseinrichtung PTNXA gesendet, die daraufhin beim Schritt S77 durch das Signal RECALL-INDICATION das erste Endgerät A von dem Rückruf in Kenntnis setzt. Dieses erste Endgerät A antwortet daraufhin beim Schritt S78 durch das Signal RECALL-RESPONNSE, das es an die erste Vermittlungseinrichtung sendet. Daraufhin werden beim Schritt S79 Leitungsmerkmalinformationen von der ersten Vermittlungseinrichtung PTNXA durch das Signal FACILITY(C5, CC-RINGOUT.INV) an die Transit-Vermittlungseinrichtung PTNXT weitergeleitet. Ein entsprechendes Signal FACILITY(C6, CC-RINGOUT.INV) wird beim Schritt S80 von der Transit-Vermittlungseinrichtung PTNXT zu der zweiten Vermittlungseinrichtung PTNXB weitergeleitet, die daraufhin beim Schritt S81 durch das Signal SETUP-REQUEST versucht, die Verbindung mit dem zweiten Endgerät B herzustellen, das jedoch zum Zeitpunkt tₓ erneut besetzt ist, wie dies in Figur 3 durch den Block ganz rechts angedeutet ist. Aufgrund des Besetztzustandes des zweiten Endgerätes B sendet dieses beim Schritt S82 ein Signal B-BUSY-INDICATION an die zweite Vermittlungseinrichtung PTNXB.

Bis zu diesem Zeitpunkt entspricht die Vorgehensweise genau der in Figur 2 dargestellten bekannten Vorgehensweise.

Erfindungsgemäß wird nunmehr anstelle des gemäß Figur 2 beim Schritt S61 gesendeten Signals DISCONNECT(C6, CC-RINGOUT. RE) beim Schritt S83 ein Signal ALERT(C6) von der zweiten Vermittlungseinrichtung PTNXB an die Transit-Vermittlungse nrichtung PTNXT gesendet. Gleichzeitig wird der vom ersten Endgerät A an das zweite Endgerät B gerichtete Ruf in das Wartefeld der zweiten Vermittlungseinrichtung PTNXB gestellt, wobei entweder ein Rufton, eine Wartemusik, eine Sprachansage oder irgendein anderes geeignetes Zeichen angeschaltet wird. Die Transit-Vermittlungseinrichtung PTNXT sendet beim Schritt S84 ein Signal ALERT(C5) an die erste Vermittlungseinrichtung PTNXA weiter, die daraufhin beim Schritt S85 ein Signal ALERT-INDICATION an das erste Endgerät A sendet. Wenn das erste Endgerät A ein Telefon ist hört der entsprechende Teilnehmer daher das Rufzeichen obwohl das zweite Endgerät B zu diesem Zeitpunkt bereits wieder besetzt ist. Die Freigabe der Verbindung C4 wird durch das Senden des Signal RELEASE(C4) beim Schritt S86 eingeleitet. Entsprechend wird die Freigabe der Verbindung C3 durch das Senden des Signals RELEASE(C3) von der Transit-Vermittlungseinrichtung PTNXT zu der ersten Vermittlungseinrichtung PTNXA beim Schritt S87 eingeleitet. Beim Schritt S88 signalisiert die Transit-Vermittlungseinrichtung PTNXT der zweiten Vermittlungseinrichtung PTNXB durch das Signal RELEASE-COMPLETE(C4) dass die Verbindung C4 getrennt wurde. Entsprechend sendet die erste Vermittlungseinrichtung PTNXA beim Schritt S89 ein Signal RELEASE-COMPLETE(C3) an die Transit-Vermittlungseinrichtung PTNXT, um anzuzeigen, dass die Verbindung C3 ebenfalls getrennt wurde. Sobald das zweite Endgerät B wieder frei ist sendet es beim Schritt S90 ein Signal B-NOT-BUSY-INDICATION an die zweite Vermittlungseinrichtung PTNXB, die daraufhin beim Schritt S91 unmittelbar ein Signal SETUP-REQUEST an das zweite Endgerät B sendet, um die Verbindung mit dem in das Wartefeld gestellten Ruf unmittelbar herstellen zu können. Als Antwort sendet das zweite Endgerät B beim Schritt S92 das Signal ALERTING-INDICATION. Beim Schritt S93 sendet das zweite Endgerät B ein Signal CONNECTING-INDICATION an die zweite Vermittlungseinrichtung PTNXB, das den Aufbau der Verbindung angibt. Daraufhin sendet die zweite Vermittlungseinrichtung PTNXB beim Schritt S94 ein Signal CONNECT(C6) an die Transit-Vermittlungseinrichtung PTNXT, das die Verbindung C6 bestätigt. Ein entsprechendes Signal CONNECT(C5) wird beim Schritt S95 von der Transit-Vermittlungseinrichtung PTNXT an die erste Vermittlungseinrichtung PTNXA weitergeleitet, die daraufhin ein Signal CONNECT-INDICATION beim Schritt S96 an das erste Endgerät A weiterleitet, um die Verbindung anzuzeigen.

Durch die in Figur 3 dargestellte Vorgehensweise wurde die gewünschte Verbindung zwischen dem ersten Endgerät A und dem zweiten Endgerät B hergestellt, obwohl das zweite Endgerät B zwischenzeitlich wieder besetzt war.

Die in den Figuren 1 bis 3 dargestellte Transit-Vermittlungseinrichtung PTNXT ist zur Durchführung des erfindungsgemäßen Verfahrens nicht zwingend erforderlich. Sie hat im dargestellten Fall lediglich die Aufgabe, die entsprechenden Signale weiterzuleiten beziehungsweise entsprechende Verbindungen zu den benachbarten Vermittlungseinrichtungen zu verwalten. Daher ist es denkbar, dass die erste Vermittlungseinrichtung PTNXA direkt mit der zweiten Vermittlungseinrichtung PTNXB kommuniziert.

Ebenso ist es denkbar, dass anstatt einer Transit-Vermittlungseinrichtung PTNXT eine Vielzahl von Transit-Vermittlungseinrichtungen PTNXT zwischen der ersten Vermittlungseinrichtung PTNXA und der zweiten Vermittlungseinrichtung PTNXB angeordnet sind.

Es wird noch einmal darauf hingewiesen, dass - wenn die Erfindung im Zusammenhang mit dem QSIG-Protokoll angewendet werden soll - dieses QSIG-Protokoll bei der Verwirklichung der Erfindung absolut eingehalten werden kann.

Wie sich durch einen Vergleich der Figuren 2 und 3 ergibt, ist es zur Verwirklichung der Erfindung bereits ausreichend, wenn nur das Verhalten der zweiten Vermittlungseinrichtung PTNXB wie beschrieben verändert wird.

Insofern entspricht die in den Figuren dargestellte zweite Vermittlungseinrichtung PTNXB der beanspruchten Vermittlungseinrichtung.

Um die erfindungsgemäßen Vorteile auch bei einem Ruf vom zweiten Endgerät B zum ersten Endgerät A nutzen zu können ist es erforderlich, das Verhalten der ersten Vermittlungseinrichtung PTNXA ebenfalls entsprechend anzupassen, was für den Fachmann klar ist.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Verfahren zum Herstellen einer Telekommunikationsverbindung zwischen einem einer ersten Vermittlungseinrichtung (PTNXA) zugeordneten ersten Endgerät (A) und einem einer zweiten Vermittlungseinrichtung (PTNXB) zugeordneten zweiten Endgerät (B), bei dem das erste Endgerät (A) einen Rückrufwunsch (CCBS-REQ; CCNR-REQ) hinterlässt, wenn das zweite Endgerät (B) bei einem vom ersten Endgerät (A) zum zweiten Endgerät (B) aufgebauten ersten Ruf besetzt oder nicht erreichbar ist, **dadurch gekennzeichnet, dass** ein als Antwort auf den gewünschten Rückruf vom ersten Endgerät (A) zum zweiten Endgerät (B) aufgebauter zweiter Ruf für den Fall, dass das zweite Endgerät (B) inzwischen erneut besetzt ist, zumindest für einen vorgegebenen Zeitabschnitt in ein der zweiten Vermittlungseinrichtung (PTNXB) zugeordnetes Wartefeld gestellt wird, um darauf zu warten, dass das zweite Endgerät (B) erneut frei wird, ohne dass das erste Endgerät (A) ein Besetztzeichen erhält.

2. Verfahren nach Anspruch 1, **dadurch gekennzeichnet, dass** der zweite Ruf vom erstem Endgerät (A) zum zweiten Endgerät (B) auf das zweite Endgerät (B) geschaltet wird, sobald das zweite Endgerät (B) wieder frei ist.

3. Verfahren nach einem der vorhergehenden Ansprüche, **dadurch gekennzeichnet, dass** es QSIG-konform durchgeführt wird.

4. Verfahren nach einem der vorhergehenden Ansprüche, **dadurch gekennzeichnet, dass** die zweite Vermittlungsstelle (PTNXB) als Antwort auf ein von dem zweiten Endgerät (B) hinsichtlich des zweiten Rufes erzeugtes Besetzt-Signal (B-BUSY-IND) anstelle eines üblicherweise an die erste Vermittlungseinrichtung (PTNXA) gesendeten Trennen-Signals (DISCONNECT) ein Freimelde-Signal (ALERT) sendet.

5. Verfahren nach einem der vorhergehenden Ansprüche, **dadurch gekennzeichnet, dass** das erste Endgerät (A), während der zweite Ruf in das der zweiten Vermittlungseinrichtung (PTNXB) zugeordnete Wartefeld gestellt ist, ein Rufzeichen erhält.

6. Verfahren nach einem der vorhergehenden Ansprüche, **dadurch gekennzeichnet, dass** das erste Endgerät (A), während der zweite Ruf in das der zweiten Vermittlungseinrichtung (PTNXB) zugeordnete Wartefeld gestellt ist, ein speziell für diesen Fall vorgesehenes Zeichen oder eine Sprachnachricht erhält.

7. Vermittlungseinrichtung, nachfolgend als zweite Vermittlungseinrichtung (PTNXB) bezeichnet, die Rückrufspeichermittel aufweist, die dazu vorgesehen sind einen Rückrufwunsch(CCBS-REQ; CCNR-REQ) zu speichern, der von einem einer ersten Vermittlungseinrichtung (PTNXA) zugeordneten ersten Endgerät (A) ausgesendet wird, wenn ein der zweiten Vermittlungseinrichtung (PTNXB) zugeordnetes zweites Endgerät (B) beim Aufbau eines ersten Rufes vom ersten Endgerät (A) zum zweiten Endgerät (B) besetzt oder nicht erreichbar war, **dadurch gekennzeichnet, dass** die zweite Vermittlungseinrichtung (PTNXB) ein Wartefeld und Mittel aufweist, die dazu vorgesehen sind, einen als Antwort auf den gewünschten Rückruf vom ersten Endgerät (A) zum zweiten Endgerät (B) aufgebauten zweiten Ruf für den Fall, dass das zweite Endgerät (B) inzwischen erneut besetzt ist, zumindest für einen vorgegebenen Zeitabschnitt in das Wartefeld zu stellen, um darauf zu warten, dass das zweite Endgerät (B) erneut frei wird, ohne dass das erste Endgerät (A) ein Besetztzeichen erhält.

8. Vermittlunaseinrichtung nach Anspruch 7, **dadurch gekennzeichnet, dass** Mittel vorgesehen sind , die den zweiten Ruf vom erstem Endgerät (A) zum zweiten Endgerät (B) auf das zweite Endgerät (B) schalten, sobald das zweite Endgerät (B) wieder frei ist.

9. Vermittlungseinrichtung nach einem der Ansprüche 7 bis 8, **dadurch gekennzeichnet, dass** sie QSIG-konforme Signale aussendet und empfängt.

10. Vermittlungseinrichtung nach einem der Ansprüche 7 bis 9, **dadurch gekennzeichnet, dass** sie als Antwort auf ein von dem zweiten Endgerät (B) hinsichtlich des zweiten Rufes erzeugtes Besetzt-Signal (B-BUSY-IND) anstelle eines üblicherweise an die erste Vermittlungseinrichtung (TNXA) gesendeten Trennen-Signals (DISCONNECT) ein Freimelde-Signal (ALERT) sendet.

11. Vermittlungseinrichtung nach einem der Ansprüche 7 bis 10, **dadurch gekennzeichnet, dass** sie, während der zweite Ruf in das Wartefeld gestellt ist, ein an das erste Endgerät (A) gerichtetes Rufzeichen sendet.

12. Vermittlungseinrichtung nach einem der Ansprüche 7 bis 11, **dadurch gekennzeichnet, dass** sie, während der zweite Ruf in das Wartefeld gestellt ist, ein an das erste Endgerät (A) gerichtetes speziell für diesen Fall vorgesehenes Zeichen oder eine Sprachnachricht sendet.

## Claims

1. Method for setting up a telecommunication connection between a first terminal (A) allocated to a first private telecommunications network exchange (PTNXA) and a second terminal (B) allocated to a second private telecommunications network exchange (PTNXB), wherein the first terminal (A) deposits a callback request (CCBS-REQ; CCNR-REQ) if the second terminal (B) is busy or does not reply when a first call is set up by the first terminal (A) to the second terminal (B), **characterized in that** a second call set up by the first terminal (A) to the second terminal (B) in reply to the requested callback is put into a waiting-queue field allocated to the second exchange (PTNXB), at least for a preset period of time, if the second terminal (B) has become busy again in the meantime, in order to wait for the second terminal (B) to become unengaged again, without the first terminal (A) receiving a busy signal.

2. Method according to claim 1, **characterized in that** the second call from the first terminal (A) to the second terminal (B) is switched to the second terminal (B) as soon as the second terminal (B) becomes unengaged again.

3. Method according to any of the preceding claims, **characterized in that** it is carried out in conformity with the QSIG.

4. Method according to any of the preceding claims, **characterized in that** the second exchange (PTNXB) transmits an alert signal (ALERT), instead of a disconnect signal (DISCONNECT) usually sent to the first exchange (PTNXA), in reply to a busy signal (B-BUSY-IND) generated by the second terminal (B) regarding the second call.

5. Method according to any of the preceding claims, **characterized in that** the first terminal (A) receives a call signal, while the second call is in the waiting-queue field allocated to the second exchange (PTNXB).

6. Method according to any of the preceding claims, **characterized in that** the first terminal (A) receives a signal or a voice message especially provided for that case, while the second call is in the waiting-queue field allocated to the second exchange (PTNXB).

7. Exchange, hereinafter referred to as second exchange (PTNXB), including callback storing means provided for storing a callback request (CCBS-REQ; CCNR-REQ) emitted by a first terminal (A) allocated to a first exchange (PTNXA), if a second terminal (B) allocated to the second exchange (PTNXB) was busy or did not reply upon set-up of a first call by the first terminal (A) to the second terminal (B), **characterized in that** the second exchange (PTNXB) includes a waiting-queue field and means provided for putting a second call set up by the first terminal (A) to the second terminal (B) in reply to the requested callback into the waiting-queue field, at least for a preset period of time, if the second terminal (B) has become busy again in the meantime, in order to wait for the second terminal (B) to become unengaged again, without the first terminal (A) receiving a busy signal.

8. Exchange according to claim 7, **characterized in that** means are provided for switching the second call from the first terminal (A) to the second terminal (B), to the second terminal (B), as soon as the second terminal (B) becomes unengaged again.

9. Exchange according to any of claims 7 to 8, **characterized in that** it transmits and receives signals which are in conformity with the QSIG.

10. Exchange according to any of claims 7 to 9, **characterized in that** it transmits an alert signal (ALERT), instead of a disconnect signal (DISCONNECT) usually sent to the first exchange (PTNXA), in reply to a busy signal (B-BUSY-IND) generated by the second terminal (B) regarding the second call.

11. Exchange according to any of claims 7 to 10, **characterized in that** it transmits a call signal directed to the first terminal (A), while the second call is in the waiting-queue field.

12. Exchange according to any of claims 7 to 11, **characterized in that** it transmits a signal or a voice message especially provided for that case, directed to the first terminal (A), while the second call is in the waiting-queue field.

## Revendications

1. Méthode pour établir une connexion de télécommunication entre un premier terminal (A) attribué à une première installation de télécommunication privée (PTNXA) et un second terminal (B) attribué à une seconde installation de télécommunication privée (PTNXB), dans laquelle le premier terminal (A) place une requête de rappel (CCBS-REQ; CCNR-REQ) si le second terminal (B) est occupé ou ne répond pas lorsqu'un premier appel est établi par le premier terminal (A) au second terminal (B), **caractérisée en ce qu'**un second appel établi par le premier terminal (A) au second terminal (B) en réponse au rappel requis est mis dans un champ de file d'attente attribué à la seconde installation de télécommunication (PTNXB), au moins pendant une période de temps prédéfinie, si le second terminal (B) est redevenu occupé entre-temps, afin d'attendre que le second terminal (B) redevienne inoccupé, sans que le premier terminal (A) reçoive un signal d'occupation.

2. Méthode selon la revendication 1, **caractérisée en ce que** le second appel du premier terminal (A) au second terminal (B) est connecté au second terminal (B) dès que le second terminal (B) redeviendrait inoccupé.

3. Méthode selon l'une quelconque des revendications précédentes, **caractérisée en ce qu'**elle s'effectue conformément au QSIG.

4. Méthode selon l'une quelconque des revendications précédentes, **caractérisée en ce que** la seconde installation de télécommunication (PTNXB) transmet un signal d'alerte (ALERT), au lieu d'un signal de déconnexion (DISCONNECT) transmis normalement à la première installation de télécommunication (PTNXA), en réponse à un signal d'occupation (B-BUSY-IND) généré par le second terminal (B) en ce qui concerne le second appel.

5. Méthode selon l'une quelconque des revendications précédentes, **caractérisée en ce que** le premier terminal (A) reçoit un signal d'appel, pendant que le second appel se trouve dans le champ de file d'attente attribué à la seconde installation de télécommunication (PTNXB).

6. Méthode selon l'une quelconque des revendications précédentes, **caractérisée en ce que** le premier terminal (A) reçoit un signal ou un message vocal spécialement prévu pour ce cas-là, pendant que le second appel se trouve dans le champ de file d'attente attribué à la seconde installation de télécommunication (PTNXB).

7. Installation de télécommunication, nommée dans ce qui suit la seconde installation de télécommunication (PTNXB), comprenant des moyens de mémorisation de rappels prévus pour mémoriser une requête de rappel (CCBS-REQ; CCNR-REQ) émise par un premier terminal (A) attribué à une première installation de télécommunication (PTNXA), si un second terminal (B) attribué à la seconde installation de télécommunication (PTNXB) a été occupé ou n'a pas répondu lors de l'établissement d'un premier appel par le premier terminal (A) au second terminal (B), **caractérisée en ce que** la seconde installation de télécommunication (PTNXB) comprend un champ de file d'attente et des moyens prévues pour mettre une seconde appel établi par le premier terminal (A) au second terminal (B) en réponse au rappel requis, dans le champ de file d'attente, au moins pendant une période de temps prédéfinie, si le second terminal (B) est redevenu occupé entre-temps, afin d'attendre que le second terminal (B) redevienne inoccupé, sans que le premier terminal (A) reçoive un signal d'occupation.

8. Installation de télécommunication selon la revendication 7, **caractérisée en ce que** des moyens son prévus pour connecter le second appel du premier terminal (A) au second terminal (B), au second terminal (B), dès que le second terminal (B) redeviendrait inoccupé.

9. Installation de télécommunication selon l'une quelconque des revendications 7 à 8, **caractérisée en ce qu'**elle transmet et reçoit des signaux conformes au.

10. Installation de télécommunication selon l'une quelconque des revendications 7 à 9, **caractérisée en ce qu'**elle transmet un signal d'alerte (ALERT), au lieu d'un signal de déconnexion (DISCONNECT) transmis normalement à la première installation de télécommunication (PTNXA), en réponse à un signal d'occupation (B-BUSY-IND) généré par le second terminal (B) en ce qui concerne le second appel.

11. Installation de télécommunication selon l'une quelconque des revendications 7 à 10, **caractérisée en ce qu'**elle transmet un signal d'appel dirigé au premier terminal (A), pendant que le second appel se trouve dans le champ de file d'attente.

12. Installation de télécommunication selon l'une quelconque des revendications 7 à 11, **caractérisée en ce qu'**elle transmet un signal ou un message vocal spécialement prévu pour ce cas-là, dirigé au premier terminal (A), pendant que le second appel se trouve dans le champ de file d'attente.
